# EUROPÄISCHE PATENTANMELDUNG

(11) **EP 1 250 017 A2**
(43) Veröffentlichungstag der Anmeldung: **16.10.2002**
(21) Anmeldenummer: 02100325.6
(22) Anmeldetag: 02.04.2002
(51) Int. Cl.: H04Q 7/22, H04L 12/58

(54) **Eingangsbestätigung von Multimedianachrichten**

(30) Priorität: 10.04.2001 DE 10117894
(71) Anmelder: SIEMENS AKTIENGESELLSCHAFT, 80333 München (DE)
(72) Erfinder: Laumen, Josef, 31141, Hildesheim (DE); Prenzel, Ralf, 38259, Salzgitter (DE); Schmidt, Andreas, 38114, Braunschweig (DE); Trauberg, Markus, 38159, Vechelde (DE); Van Niekerk, Sabine, 38228, Salzgitter (DE)

(57) **Zusammenfassung**

Der Sender einer Multimedianachricht ist in der Regel über den Verbleib der Nachricht im Unklaren, wenn diese zunächst in einem Postfach des Empfängers gespeichert und der Empfänger weder über diese Nachricht im Postfach benachrichtigt werden konnte, noch diese bereits heruntergeladen hat. Daher wird in der Verbindungseinheit (M-SRB), die dem Empfänger (M-UA_B) zugeordnet ist, eine Benachrichtigung (M-Dind1) erzeugt, welche dann an eine Senderverbindungseinheit (M-SRA) und weiter an den Sender (M-UA_A) gesendet wird. Die Art der vom Sender (M-UA_A) gewünschten Benachrichtigung (M-Dind1), oder andere kann im Header der Sendeanfrage (M-Sreq), in der der Sender die Multimedianachricht absendet, codiert werden. Damit erhält der Empfänger eine individuelle Rückkoppelung über den Verbleib der Multimedianachricht.

## Beschreibung

Die vorliegende Erfindung betrifft ein Verfahren zum Senden einer Nachricht durch Senden der Nachricht zu einer einem Empfänger zugeordneten Empfängerverbindungseinheit durch eine Sendeanfrage. Insbesondere betrifft die vorliegende Erfindung die Bestätigung für den Sender einer Multimedianachricht im Multimedia Message Service (MMS) über das Eintreffen dieser Multimedianachricht im Posteingangsfach des Empfängers und das Anfordern einer solchen Bestätigung.

Das Mobilfunksystem GSM (Global System for Mobile Communications, s.a. Abkürzungsverzeichnis) bietet neben der Sprachtelephonie auch die Möglichkeit, kurze Textnachrichten von bis zu 160 Zeichen Länge zu versenden bzw. zu empfangen. Dieser Dienst heißt Short Message Service (SMS).

Für das Mobilfunksystem der nächsten Generation UMTS (Universal Mobile Telecommunication System) wird zur Zeit eine multimediafähige Variante eines mobilen Nachrichtendienstes standardisiert, der sogenannte Multimedia Messaging Service (MMS) gemäß *3G TS 23.140* version 4.2.0, Release 4; Third Generation Partnership Project; Technical Specification Group Terminals; Multimedia Messaging Service (MMS); Functional Description; Stage 2, und *3G TS 22.140* v.4.1.0: 3rd Generation Partnership Project; Technical Specification Group Services and System Aspects; Service Aspects; Stage 1 Multimedia Messaging Service. Nachrichten mit multimedialen Inhalten werden im Folgenden zur besseren Abgrenzung von den Textnachrichten des SMS nur noch kurz MM (Multimedia Message) genannt. Im Gegensatz zum SMS entfällt die Beschränkung auf reine Textinhalte. Beim MMS wird es auch möglich sein, Texte dem individuellen Geschmack entsprechend zu formatieren, sowie beliebige Inhalte in eine Nachricht einzubetten. Dazu zählen u.a. Audio- und Videoinhalte, Standbilder, Grafiken und Texte.

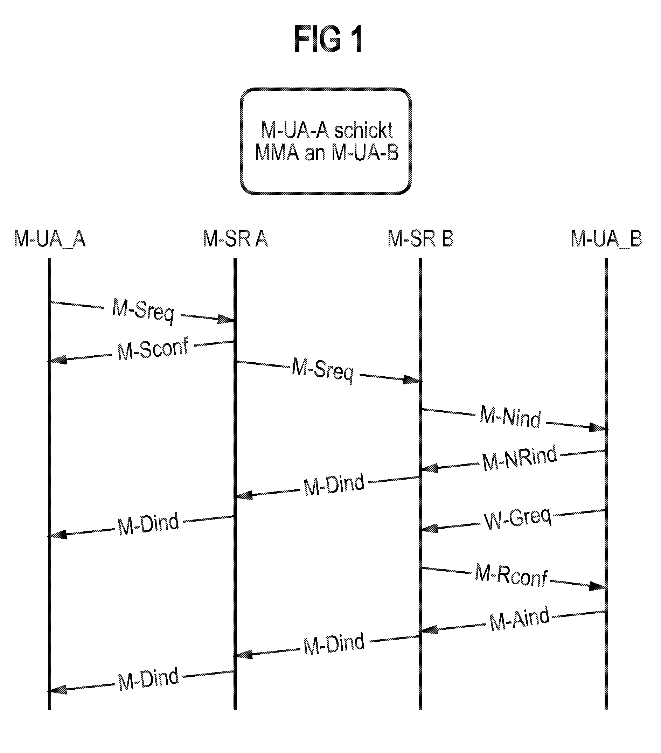

Nach dem bisherigen Stand der Technik ist eine Implementierung von MMS lediglich über WAP (Wireless Application Protocol) realisierbar. Zur Überbrückung der Luftschnittstelle zwischen einem MMS-tauglichen Endgerät und dem WAP Gateway ist nach *WAP-209-MMSEncapsulation*, Wireless Application Protocol; WAP Multimedia Messaging Service; Message Encapsulation; MMS Proposed SCD 1.0 und *WAP-203-WSP*, Version 4-May-2000; Wireless Application Protocol, Wireless Session Protocol Specification; Chapter 8.4: "Header Encoding" die Benutzung des WAP Wireless Session Protocols (WSP) vorgesehen. Fig. 1 zeigt ein allgemeines Nachrichtenflussdiagramm nach heutigem Stand der Technik in dem der Austausch der MMS Nachrichten zwischen den beteiligten Instanzen (MMS Nutzer-applikation A (im Folgenden mit M-UA A abgekürzt), MMS Verbindungseinheit A (im Folgenden M-SR A), MMS Verbindungseinheit B (im Folgenden M-SR B), MMS Nutzerapplikation B (im Folgenden M-UA B)) bei Versand bzw. Empfang einer MM dargestellt ist. Unter *MMS Nutzerapplikation (M-UA)* versteht man eine Applikation auf einem Mobilfunkgerät oder auf einem an ein Mobilfunkgerät angeschlossenen Gerät (z.B. Laptop, o.ä.), welche die MMS-Funktionalität realisiert. Eine *MMS Verbindungseinheit (M-SR)* ist ein Netzelement eines MMS Dienstleisters (MMS Service Provider), das den *MMS Nutzerapplikationen* die MMS-Funktionalität zur Verfügung stellt. Eine Multimedianachricht besteht grundsätzlich aus einem Kopfteil (dem so genannten Header) und einem Datenteil (dem so genannten Body), der die Multimediaobjekte enthält.

Zwischen den beteiligten Elementen werden die Informationen mit Nachrichten ausgetauscht, die in dem allgemeinen Nachrichtenflussdiagramm in Fig. 1 (*"M-UA A* schickt MM_{A} an *M-UA B"*) mit Pfeilen dargestellt sind.

Ein Sender M-UA A schickt eine Multimedianachricht (MM) mit einer MMS Sendeanfrage M-Sreq an die Senderverbindungseinheit bzw. MMS Verbindungseinheit A, M-SR A. Die M-SR A antwortet dem M-UA A mit einer MMS Sendebestätigung M-Sconf, dass die M-Sreq angekommen ist. Die M-SR A leitet die MM weiter zur Empfängerverbindungseinheit M-SR B. Dem Empfänger M-UA B der MM wird von der M-SR B mit einer MMS Empfängerbenachrichtigung M-Nind mitgeteilt, dass für den Empfänger eine Multimedianachricht zur Abholung in dem MMS-Posteingangsfach (im Folgenden M-Postfach) des Empfängers auf der M-SR B bereitliegt. Der Empfänger bestätigt den Eingang der M-Nind mit einer MMS Empfängerbenachrichtigungsbestätigung M-NRind an die M-SR B. Der Empfänger hat nun die Möglichkeit, zu einem späteren Zeitpunkt die für ihn bereitgestellte Nachricht mittels einer MMS Zustellanfrage W-Greq bei der M-SR B anzufordern. Die M-SR B überträgt die angeforderte Multimedianachricht mit einer MMS Zustellungsnachricht M-Rconf an den M-UA B. Dieser bestätigt den Eingang der M-Rconf mit einer MMS Zustellungsbestätigung M-Aind. Die M-SR B generiert aus der M-Aind eine MMS Zustellungsbenachrichtigung M-Dind, die über die M-SR A an den Sender M-UA A übertragen wird.

Das hier vorgestellte allgemeine Nachrichtenflussdiagramm bezieht sich auf den Fall des "späteren Herunterladens" einer MM (siehe *WAP-209-MMSEncapsulation*). Der Fall des "sofortigen Herunterladens" (siehe ebenfalls *WAP-209-MMSEncapsulation*) einer MM unterscheidet sich hauptsächlich in der Abfolge einiger Nachrichten. Das erfindungsgemäße Verfahren ist ohne prinzipielle Einschränkungen auch auf diesen Fall anwendbar. Daher wird der Fall des "sofortigen Herunterladens" im Folgenden nicht näher aufgeführt.

Die M-Aind und die M-Dind sind gemäß *3G TS 23.140* im MMS optional. Weiterhin ist im MMS optional vorgesehen, dass der Sender nach der M-NRind eine MMS Zustellungsbenachrichtigung M-Dind bekommen kann, wenn ein Fehler aufgetreten ist (z.B. die MM ein vorgegebenes Zeitlimit überschritten hat), wenn der Empfänger die MM zurückweist, wenn die MM sofort geladen wird und optional wenn die MM erst später von der M-SR B heruntergeladen wird.

Im MMS fehlt jedoch die Möglichkeit, den Sender einer Multimedianachricht darüber zu informieren, dass die gesendete MM in dem M-Postfach des Empfängers eingegangen ist.

Dementsprechend besteht die Aufgabe der vorliegenden Erfindung darin, eine Möglichkeit zu schaffen, den Sender einer Nachricht, insbesondere Multimedianachricht, darüber zu informieren, dass die von ihm abgesandte Nachricht in dem Postfach des Empfängers angekommen ist. Darüber hinaus soll generell die Möglichkeit geschaffen werden, den Typ des Statusreports durch den Sender anzufordern. Wünschenswert dabei ist, dass der Sender bestimmen kann, welche Benachrichtigungen er bekommen möchte.

Erfindungsgemäß wird diese Aufgabe gelöst durch ein Verfahren nach Anspruch 1 und eine Vorrichtung nach Anspruch 20 und 31.

Vorteilhafte Weiterbildungen der Erfindung finden sich in den Unteransprüchen.

In vorteilhafter Weise kann durch die Erfindung gemäß einer ersten Ausführungsform eine Benachrichtigung im Rahmen des MMS (Multimedia Messaging Service) eingeführt werden, mit der der Sender einer Multimedianachricht (MM) im MMS darüber benachrichtigt wird, dass die von ihm gesendete MM in dem MMS-Posteingangsfach (M-Postfach) des Empfängers auf der M-SR B angekommen ist - unabhängig davon, ob der Empfänger bereits über die neue MM im M-Postfach benachrichtigt wurde.

Vorzugsweise wird gemäß einer zweiten Ausführungsform die Möglichkeit eingeräumt, dass der Sender einer Multimedianachricht MM die Art der Übermittlungsbestätigung im MMS auswählen kann.

Gemäß einer dritten Ausführungsform kann die Möglichkeit gegeben werden, dass dem Empfänger in der Benachrichtigung über eine neue MM im M-Postfach mitgeteilt wird, ob der Sender eine Übermittlungsbestätigung über das Erreichen des M-Postfachs erhalten hat.

Darüber hinaus besteht gemäß einer vierten Ausführungsform die Möglichkeit, dass der Empfänger eine Benachrichtigung über den Eingang seiner Multimedianachricht MM in dem M-Postfach des Empfängers an den Sender untersagen kann.

Eine fünfte Ausführungsform dieser Erfindung ermöglicht die Codierung der gemäß der ersten Ausführungsform eingeführten Benachrichtigung.

Weiterhin sieht eine sechste Ausführungsform der vorliegenden Erfindung die Codierung der gemäß der zweiten Ausführungsform eingeführten Information (die Anforderung einer bestimmten Art der Übermittlungsbestätigung) im Kopfteil einer Multimedianachricht (MM) vor.

Weiterhin kann gemäß einer siebten Ausführungsform die Codierung der entsprechenden Information bezüglich der dritten Ausführungsform dieser Erfindung im Kopfteil einer Multimedianachricht MM erfolgen.

Die Erfindung wird nun anhand der beigefügten Zeichnungen näher erläutert, in denen zeigen:
Fig. 1 ein allgemeines Nachrichtenflussdiagramm im Multimedia Message Service (MMS) nach dem Stand der Technik; und
Fig. 2 ein erfindungsgemäßes Nachrichtenflussdiagramm im Multimedia Message Service (MMS).

Die einzelnen Ausführungsformen der Erfindung werden nun näher beschrieben und anhand eines Ausführungsbeispiels näher erläutert.

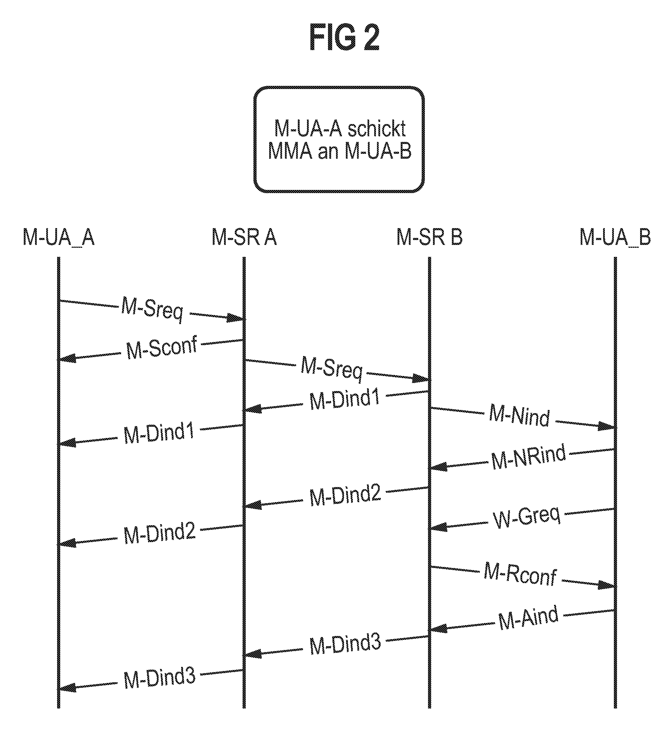

Fig. 2 zeigt das erfindungsgemäße allgemeine Nachrichtenflussdiagramm. Die Empfängerverbindungseinheit M-SR B sendet, nach dem sie die Sendeanfrage M-Sreq erhalten hat, eine Zustellungsbenachrichtigung M-Dind 1 an die Sendervermittlungseinheit M-SR A. Diese wiederum leitet die Zustellungsbenachrichtigung M-Dind 1 an den Empfänger M-UA_A weiter.

Die erste Ausführungsform der vorliegenden Erfindung, bei der der Sender einer Multimedianachricht grundsätzlich über den Eingang dieser Nachricht in dem Postfach des Empfängers benachrichtigt wird, erweist sich insbesondere bei dem folgenden Szenario als vorteilhaft:

Angenommen der Sender adressiert eine wichtige MM an einen Empfänger und fordert eine Übermittlungsbestätigung für diese MM an. Falls der Empfänger jedoch z.Zt. nicht regelmäßig über den Status seines M-Postfachs benachrichtigt werden kann-z.B. wenn der Empfänger im mehrwöchigen Urlaub sein Mobiltelefon nicht einschaltet -, so wird der Sender nach Stand der Technik zunächst keine Übermittlungsbestätigung erhalten. Erst wenn der Empfänger wieder über neue MMs im M-Postfach benachrichtigt wird, erhält der Sender eine Übermittlungsbestätigung. Ein Umstand, welcher für den Sender äußerst ungünstig ist. Er wird in der Zwischenzeit annehmen, dass seine MM aufgrund eines Übermittlungsfehlers nicht angekommen ist und wird diese wahrscheinlich mehrmals (erfolglos) erneut versenden.

Die Erfindung erlaubt es dem Sender dagegen, darüber informiert zu werden, dass seine MM das M-Postfach des Empfängers erreicht hat. Dies hilft dem Sender Übermittlungsfehler auszuschließen.

Die zweite Ausführungsform der vorliegenden Erfindung ermöglicht, dass der Sender einer Multimedianachricht MM die Art der Übermittlungsbestätigung im MMS auswählen kann, d. h. ob er (der Sender) eine Bestätigung in folgenden Fällen erhalten möchte,
a) nachdem die von ihm gesendete MM in dem M-Postfach des Empfängers angekommen ist,
b) und/oder nachdem das Eintreffen der M-Nind vom Empfänger bestätigt worden ist,
c) und/oder nachdem der Empfänger die MM von der M-SR auf das Empfangsgerät heruntergeladen hat.

Bisher ist es nach Stand der Technik dem MMS Dienstanbieter des Empfängers überlassen, welche Art von Übermittlungsbestätigung ein Sender erhält. Erfindungsgemäß erhält der Sender die Entscheidungsgewalt über die Auswahl der Art der gewünschten Übermittlungsbestätigung - wobei er eine oder mehrere Arten auswählen kann.

Die dritte Ausführungsform der vorliegenden Erfindung sieht vor, dass dem Empfänger in der Benachrichtigung über eine neue MM im M-Postfach mitgeteilt wird, ob der Sender eine Übermittlungsbestätigung über das Erreichen des M-Postfachs erhalten hat.

Dabei ist es vorteilhaft, wenn der Sender einer Multimedianachricht (MM) im MMS jedoch auch die Möglichkeit erhält, die o. g. Anzeige/Mitteilung an den Empfängernämlich dass er (der Sender) nach dem Eingang seiner Nachricht in dem M-Postfach des Empfängers eine Benachrichtigung erhalten hat - zu unterdrücken.

Die vierte Ausführungsform der vorliegenden Erfindung sieht vor, dass der Empfänger eine Benachrichtigung über den Eingang seiner Multimedianachricht MM in dem M-Postfach des Empfängers an den Sender untersagen kann. Diese Möglichkeit kann in den Einstellungen im MMS Benutzerprofil des Empfängers auf der MMS Verbindungseinheit codiert werden, und z. B mittels WAP-UAProf, Wireless Application Group, User Agent Profile Specification, dynamisch eingestellt worden.

Die fünfte Ausführungsform der vorliegenden Erfindung sieht die Codierung der Benachrichtigung vor. Diese Benachrichtigung für den Fall, dass die vom Sender geschickte Multimedianachricht (MM) in dem M-Postfach des Empfängers angekommen ist, basiert auf der in *3G TS 23.140, WAP-209-MMSEncapsulation* und *WAP-203-WSP* vorgesehenen M-Dind und kann grundsätzlich im Kopfteil der M-Dind folgendermaßen codiert werden:

Die M-Dind wird gemäß Abbildung 2 (dort als M-Dind1 bezeichnet) verwendet und im Kopfteil (Header) der M-Dind werden die möglichen Werte eines bestehenden Datenelements (Header Field) erweitert, um den Status der gesendeten MM anzuzeigen (gemäß Tabelle 1).

Die sechste Ausführungsform der vorliegenden Erfindung ermöglicht das Anfordern einer bestimmten Art der Übermittlungsbestätigung zu codieren.

Die Information, welche Bestätigung/en der Sender erhalten möchte, kann beispielsweise auf mehrere Arten codiert werden:
1) Im Kopfteil der M-Sreq (siehe Tabelle 2), bzw. der M-Rconf, werden die möglichen Werte eines bestehenden Datenelements (Header Field) erweitert, um die entsprechenden Benachrichtigungen anzufordern. Das bestehende Datenelement (X-Mms-Delivery-Report) hat bisher die möglichen Werte (Yes|No) (siehe *WAP-209* *MMSEncapsualtion*) und wird um die in Tabelle 3 aufgeführten Werte erweitert. Eine Zuweisung der neu definierten Werte zu den entsprechenden Fällen a) bis c) der zweiten Ausführungsform ist in Tabelle 4 gegeben.
   Zusätzlich wird im Kopfteil der M-Nind (siehe Tabelle 5) ein Datenelement (X-Mms-Delivery-Report) gemäß Tabelle 3 eingefügt, dass dem Empfänger anzeigt, dass der Sender der MM eine M-Dind über den Empfang der M-Nind haben möchte. In dem neuen Datenelement (X-Mms-Delivery-Report) werden die in Tabelle 3 aufgeführten Werte verwendet. Diese Informationen in M-Nind entsprechen einer Realisierung des ersten teils der Ausführungsform 3.
2) Variante nur für Fall a) der zweiten Ausführungsform: Im Kopfteil der M-Sreq (siehe Tabelle 2) wird ein Datenelement (X-Mms-Inbox-reached-Report) gemäß Tabelle 6 eingefügt, das der empfangsseitigen M-SR B anzeigt, dass der Sender der MM eine M-Dind über den Eingang der MM in dem M-Postfach des Empfängers erhalten möchte.
3) Variante nur für Fall b) der zweiten Ausführungsform: Im Kopfteil der M-Sreq (siehe Tabelle 2) wird ein Datenelement (X-Mms-Notification-Report) gemäß Tabelle 7 eingefügt, das dem Empfänger anzeigt, dass der Sender eine M-Dind erhalten möchte, nachdem die M-Nind der entsprechenden MM beim Empfänger eingetroffen ist.
4) Kombination aus Variante 2) und Variante 3), um Fall a) und b) zusammen abzudecken.
5) Kombination aus Variante 2) und Variante 3) mit nur einem neuen Datenelement (gemäß Tabelle 7 oder Tabelle 6) und entsprechenden Werten aus Variante 1), um Fall a) und b) zusammen abzudecken.

Von den fünf Möglichkeiten besitzt die erste den Vorteil, dass bei der M-Sreq vom M-UA A zur M-SR A, bzw. bei der M-Rconf von der M-SR B zum M-UA B, kein neues Datenelement übertragen werden muss, sondern ein bestehendes Datenelement nur um einige Werte erweitert wird. Zusätzlich von Vorteil ist, dass diese Erweiterung im Rahmen der nach dem Stand der Technik vorgesehenen Datengröße liegt. Es wird gegenüber den Varianten 2) bis 5) kein zusätzliches Datenaufkommen übertragen.

Von den hier beschriebenen Varianten sollte die Variante 1) bevorzugt realisiert werden.

Schließlich kann gemäß der siebten Ausführungsform der vorliegenden Erfindung der Unterpunkt in der dritten Ausführungsform realisiert werden. D. h. der Sender bestimmt im M-Sreq nicht nur, welche Art einer Übermittlungsbestätigung über das Erreichen des M-Postfachs er (der Sender) erhalten möchte, sondern auch, ob dem Empfänger mitgeteilt werden soll, dass eine solche Bestätigung gesendet wird. Diese Information kann im Kopfteil einer Multimedianachricht MM codiert werden.

In Anlehnung an Variante 1 der vierten Ausführungsform wird die Codierung gemäß Tabelle 8 vorgeschlagen. Eine Zuweisung der neu definierten Werte zu den entsprechenden Fällen a) bis c) der zweiten Ausführungsform ist in Tabelle 9 gegeben, welche den laufenden Nummern 2 bis 7 entsprechen (wie in Tabelle 4). Die Werte in den laufenden Nummern 9 bis 12 ermöglichen dem Sender den Typ der Übermittlungsbestätigung auszuwühlen und gleichzeitig ein Informieren des Empfängers zu verhindern.

### Ausführungsbeispiel

Im nun folgenden Ausführungsbeispiel, wird die Möglichkeit demonstriert, dass der Sender alle Bestätigungen Fall a)- c) der zweiten Ausführungsform gemäß Variante 1 der vierten Ausführungsform erhält.

Es wird beispielhaft folgendes Szenario angenommen: Ein Sender *M-UA A* (User A) verschickt eine Multimedianachricht MM_{A}, bestehend aus einem Text, an einen Empfänger *M-UA B* (User B). Die folgenden Nachrichten werden zwischen den Einheiten übertragen. Für diese MM_{A} möchte der Sender alle Typen von Übermittlungsbestätigung erhalten.

MM_{A} wird an den Adressaten verschickt

M-Sreq (MMS User Agent A → MMS Relay A):
X-Mms-Message-Type: m-send-req
X-Mms-Transaction-ID: TRANSACTION-ID#1
X-Mms-Version: 1.0
Date: Fri, 14 Jul 2000 14:12:19 +0100
From: usera@siemens.de
To: userb@siemens.de
Subject: Foto vom Laboraufbau
X-Mms-Priority: High
X-Mms-Delivery-Report: All
Content-Type: text/plain;
nEntries: 1
HeadersLen: XX
DataLen: XX
Hallo User B,
schicke mir bitte ganz dringend das Bild von unserem Laboraufbau zu!
MfG
User A

In der M-Sreq ist im Kopfteil das erweiterte Datenelement zur Anfrage aller Benachrichtigungen codiert (grau hinterlegt).

Die M-Sreq des M-UA A wird mit einer *M-Sconf* von der M-SR A quittiert. Im Rahmen dieser Erfindung wird diese Nachricht nicht modifiziert und daher auch hier nicht aufgeführt.

Die M-Sreq wird zwischen der M-SR A und der M-SR B entsprechend *3G TS 23.140* im wesentlichen unverändert übertragen. Sie und alle weiteren Nachrichten zwischen den M-SR's sind daher nicht weiter aufgeführt.

Im MMS ist vorgesehen, dass die empfangsseitige M-SR die MM speichert, das heisst im M-Postfach des Empfängers ablegt. Nach dieser Erfindung (Fall a) wird nun eine M-Dind1 von der empfangsseitigen M-SR B generiert, die dem Sender mitteilt, dass seine MM in dem M-Postfach des Empfängers eingegangen ist. Die M-Dind1 wird nicht gesendet, wenn der Empfänger dieses durch entsprechende Einstellungen untersagt. Die M-Dind1, die von der M-SR A zum M-UA A übertragen wird, sieht folgendermaßen aus:

M-Dind1 (M-SR A 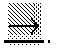 M-UA A)
X-Mms-Message-Type: m-delivery-ind
X-Mms-Version: 1.0
X-Mms-Message-ID : MESSAGE-ID#1
Date: Fri, 14 Jul 2000 14:14:29 +0100
To: userb@siemens.de
X-Mms-Status: Inbox-reached

In diesem Beispiel enthält die neue Nachricht den Status "Inbox-reached", was dem Sender User A mitteilt, dass seine MM_{A} in dem M-Postfach des Empfängers User B eingegangen ist (siehe Tabelle 3).

Im MMS gemäß *3G TS 23.140* und *WAP-209-MMSEncapsulation* ist vorgesehen, einen Empfänger einer MM über neue Nachrichten, die für ihn vorliegen, zu informieren. Die M-Nind dient der Benachrichtigung des Adressaten über zum Herunterladen bereitliegende MM's. In diesem Beispiel wird eine Benachrichtigung an den Empfänger User B versendet.

M-Nind (M-RS B → M-UA B) :
X-Mms-Message-Type: m-notification-ind
X-Mms-Transaction-ID: TRANSACTION-ID#2
X-Mms-Version: 1.0
From: usera@siemens.de
X-Mms-Message-Class: Personal
X-Mms-Message-Size: XXX (Attachments + Header)
X-Mms-Expiry: 3600
X-Mms-Content-Location: www.sal.siemens.de/mms-inbox/ABCD.1234
Subject: Foto vom Laboraufbau
X-Mms-Delivery-Report: All

In der M-Nind wird nach dieser Erfindung ein neues Datenelement hinzugefügt (X-Mms-Delivery-Report, siehe Tabelle 3), dass dem Empfänger (M-UA B) mitteilt, welche Benachrichtigungen der Sender über seine MM haben möchte.

Auf die M-Nind wird mit einer M-NRind geantwortet. In dieser Antwort ist vorgesehen, dass der Empfänger die Möglichkeit hat, eine eventuelle Benachrichtigung an den Sender zu untersagen. Im Rahmen dieser Erfindung wird diese Nachricht nicht verändert, so dass sie in diesem Beispiel nicht weiter aufgeführt wird.

Erlaubt der Empfänger eine Benachrichtigung an den Sender, so wird eine M-Dind2 von der M-SR B generiert und an den M-UA A geschickt. Der Status-Wert "Deferred" kann hier verwendet werden.

M-Dind2 (M-RS A → M-UA A) :
X-Mms-Message-Type: m-delivery-ind
X-Mms-Version: 1.0
X-Mms-Message-ID : MESSAGE-ID#1
Date: Fri, 14 Jul 2000 16:10:10 +0100
To: userb@siemens.de
X-Mms-Status: Deferred

Das Herunterladen der MM_{A} wird durch die W-Greq veranlasst. Die MM wird daraufhin von der M-SR B mit einer M-Rconf zum Empfänger M-UA B gesendet.

M-Rconf (M-RS B → M-UA B) :
X-Mms-Message-Type: m-retrieve-conf
X-Mms-Transaction-ID: TRANSACTION-ID#3
X-Mms-Version: 1.0
Date: Fri, 14 Jul 2000 16:52:19 +0100
From: usera@siemens.de
To: userb@siemens.de
X-Mms-Message-ID: MESSAGE-ID#1
Subject: Foto vom Laboraufbau
X-Mms-Priority: High
X-Mms-Delivery-Report: All
Content-Type: text/plain;
nEntries: 1
HeadersLen: XX
DataLen: XX
Hallo User B,
schicke mir bitte ganz dringend das Bild von unserem Laboraufbau zu!
MfG
User A

In der M-Rconf ist das Datenelement X-Mms-Delivery-Report mit den gemäß dieser Erfindung erweiterten Werten enthalten (Tabelle 3 und Tabelle 10). Dem M-UA B wird so mitgeteilt, welche Benachrichtigungen der Sender (M-UA-A) über seine MM haben möchte.
Die weiteren Nachrichten einer MMS-Implementierung bleiben von dieser Erfindung unberührt und werden hier nicht dargestellt.

Ergänzend sei hier auf Tabelle 11 verwiesen, die die Zuweisung binärer Codes zu den Feldnamen insbesondere auch zu den erfindungsgemäß verwendeten Feldnamen zeigt.

### Abkürzungsverzeichnis

- GSM: Global System for Mobile Communication
- MM: Multimedianachtricht (Multimedia Message)
- MMS: Multimedia Message Service
- SMS: Short Message Service
- UMTS: Universal Mobile Telecommunication System
- WAP: Wireless Application Protocol
- WSP: Wireless Session Protocol

### spezielle Abkürzungen in dieser Erfindungsmeldung:

- M-UA: MMS Nutzer Applikation
- M-SR: MMS Verbindungseinheit
- M-Sreq: MMS Sendeanfrage
- M-Sconf: MMS Sendebestätigung
- M-Nind: MMS Empfängerbenachrichtigung
- M-NRind: MMS Empfängerbenachrichtigungsbestätigung
- W-Greq: MMS Zustellanfrage
- M-Rconf: MMS Zustellungsnachricht
- M-Aind: MMS Zustellungsbestätigung
- M-Dind: MMS Zustellstatusbenachrichtigung
- M-Postfach: MMS Posteingangsfach des Empfängers einer MM auf der M-SR

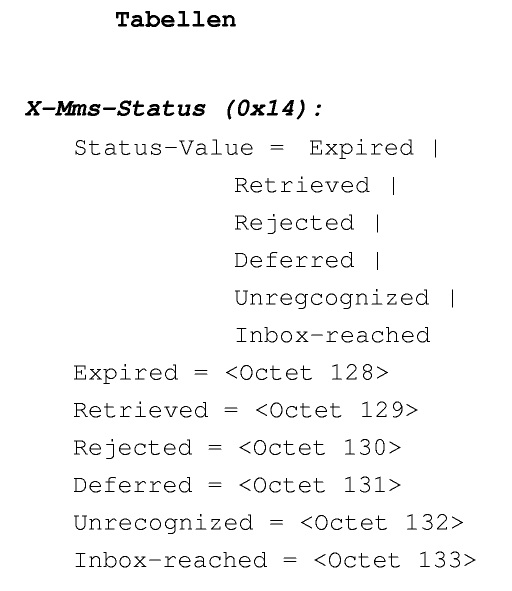

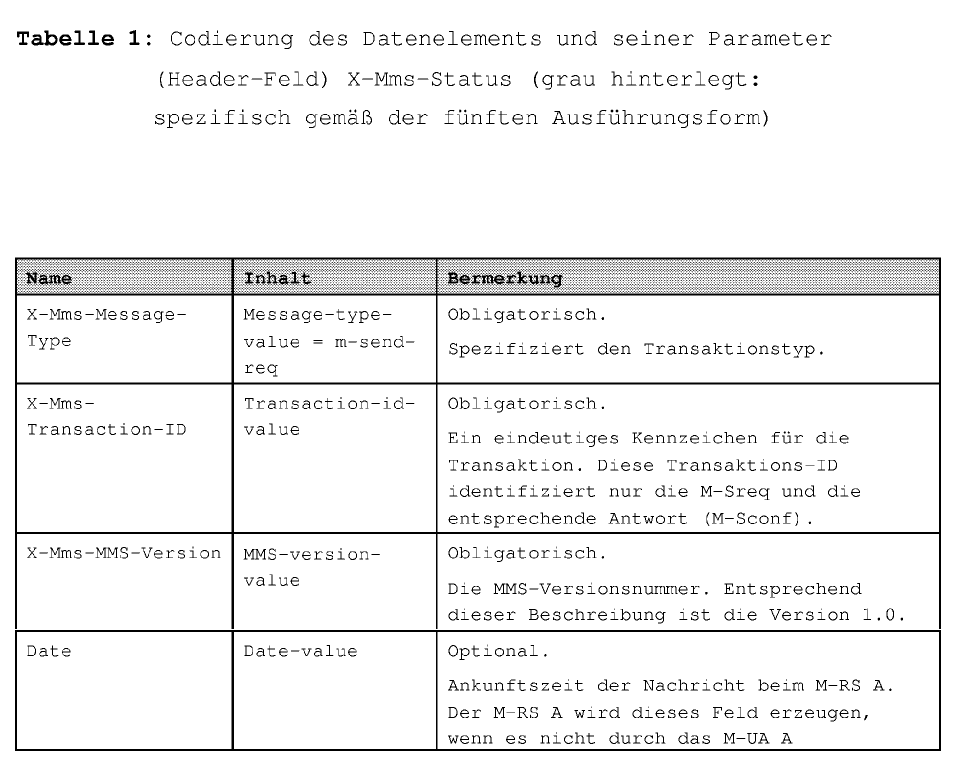

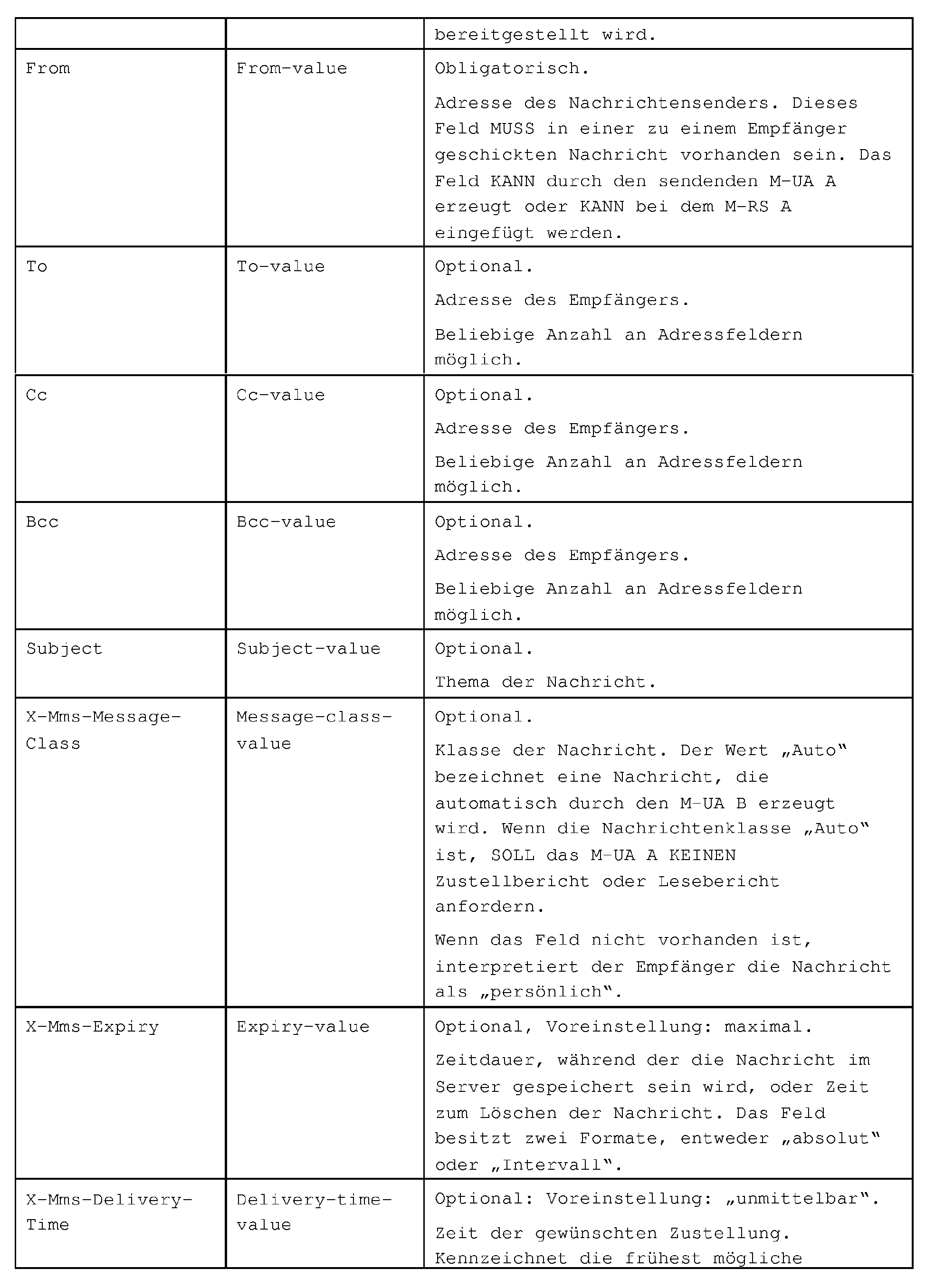

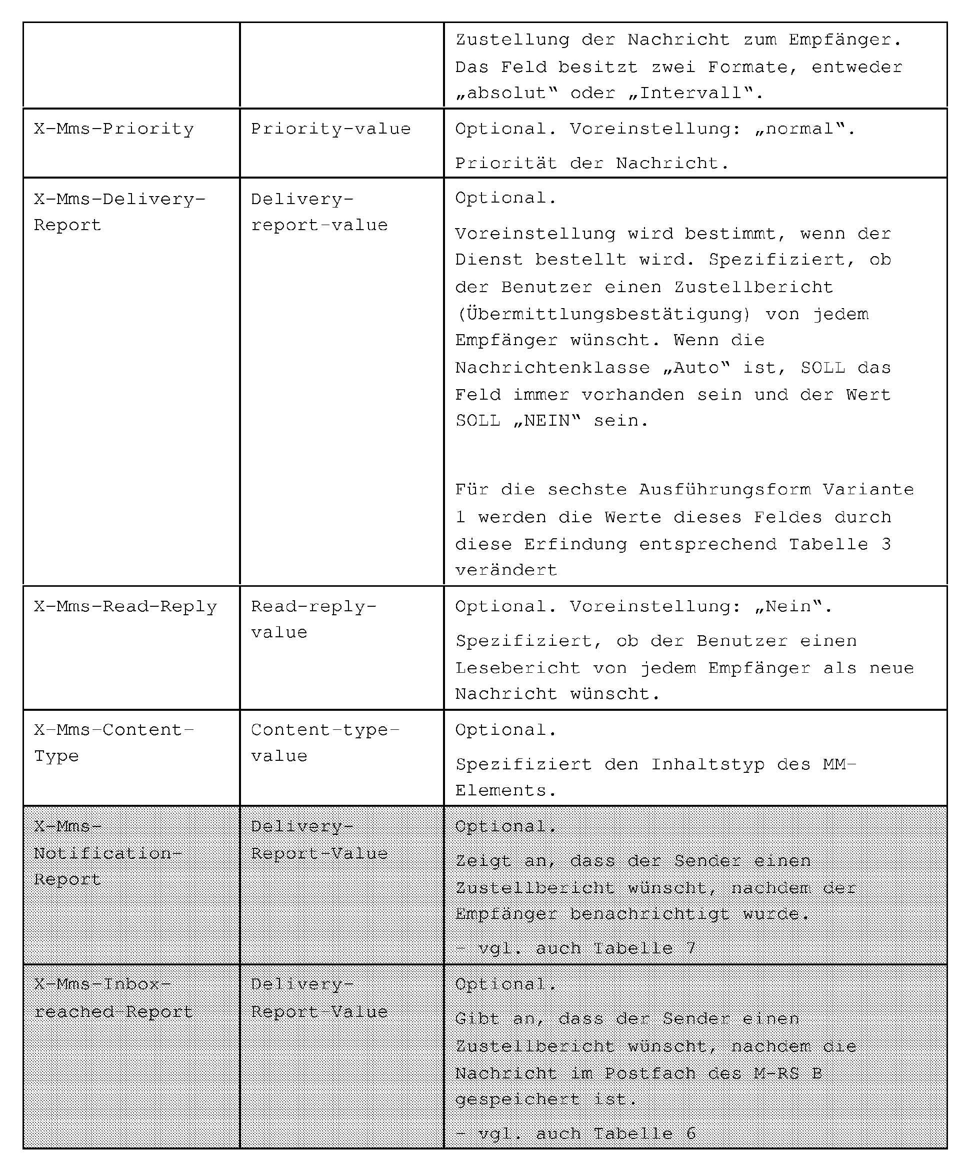

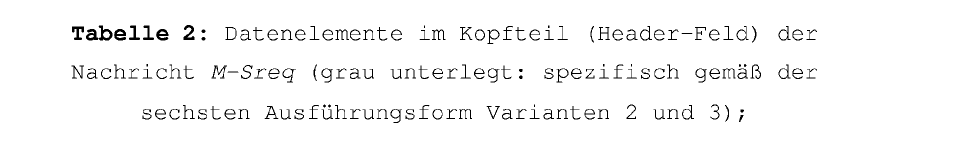

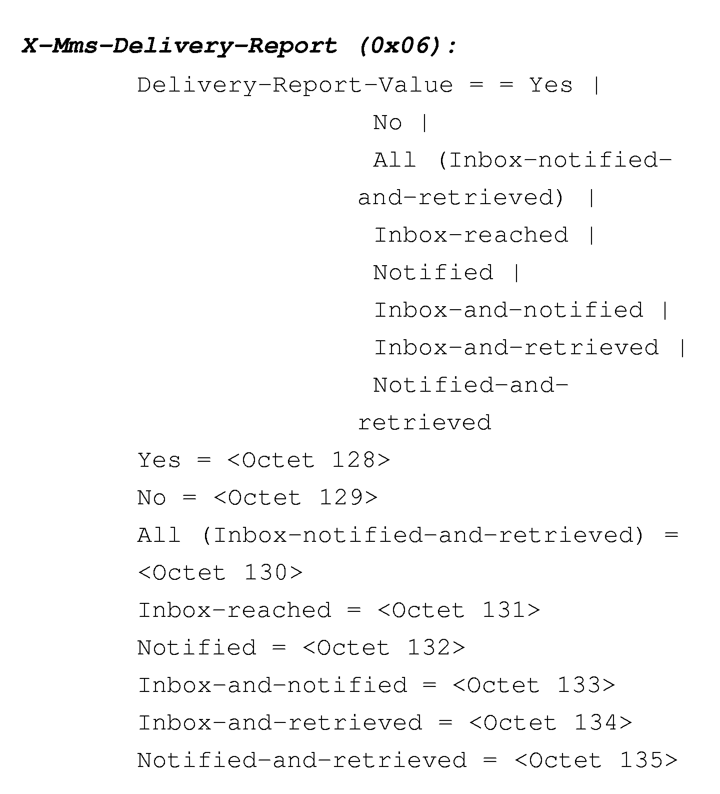

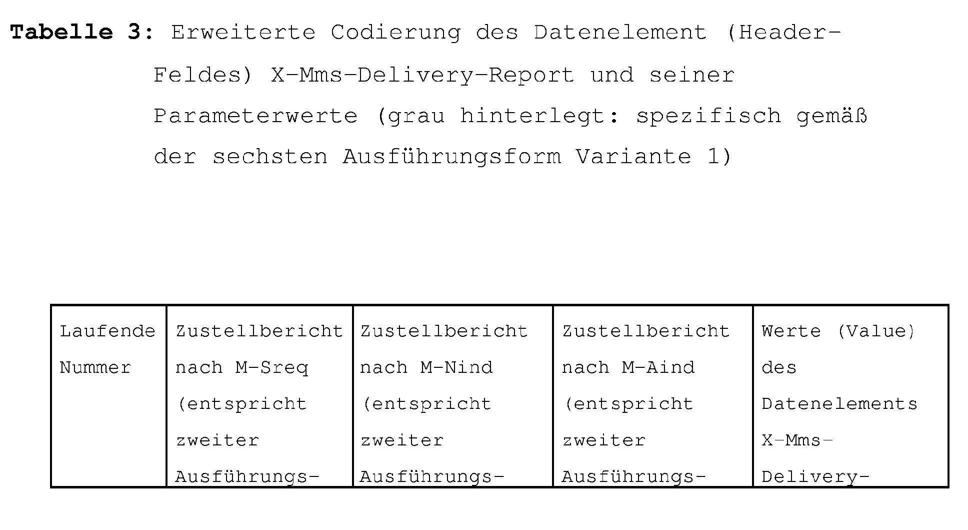

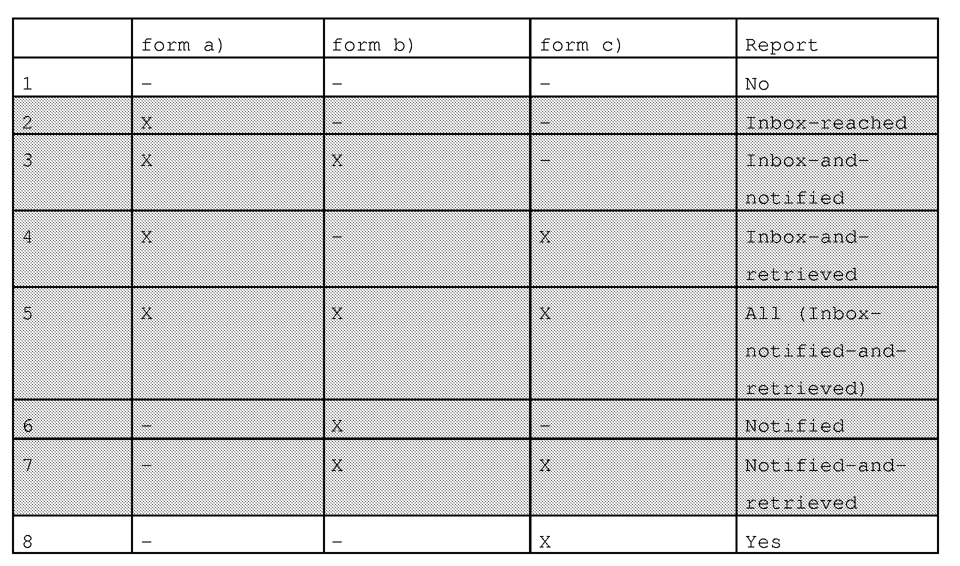

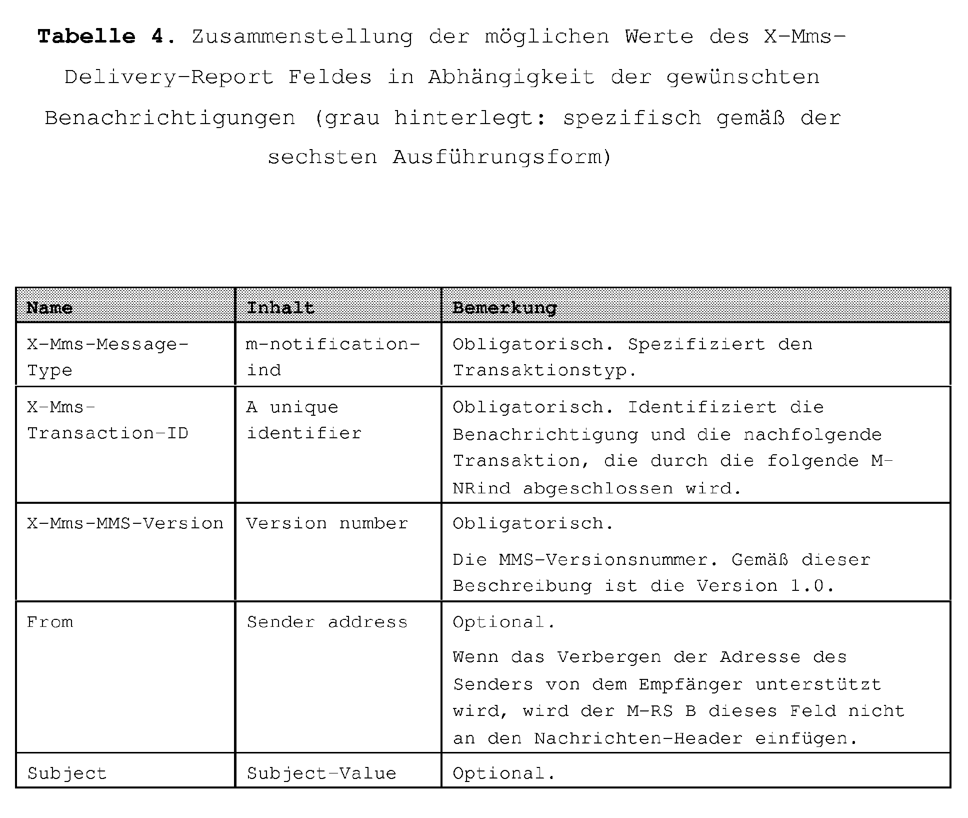

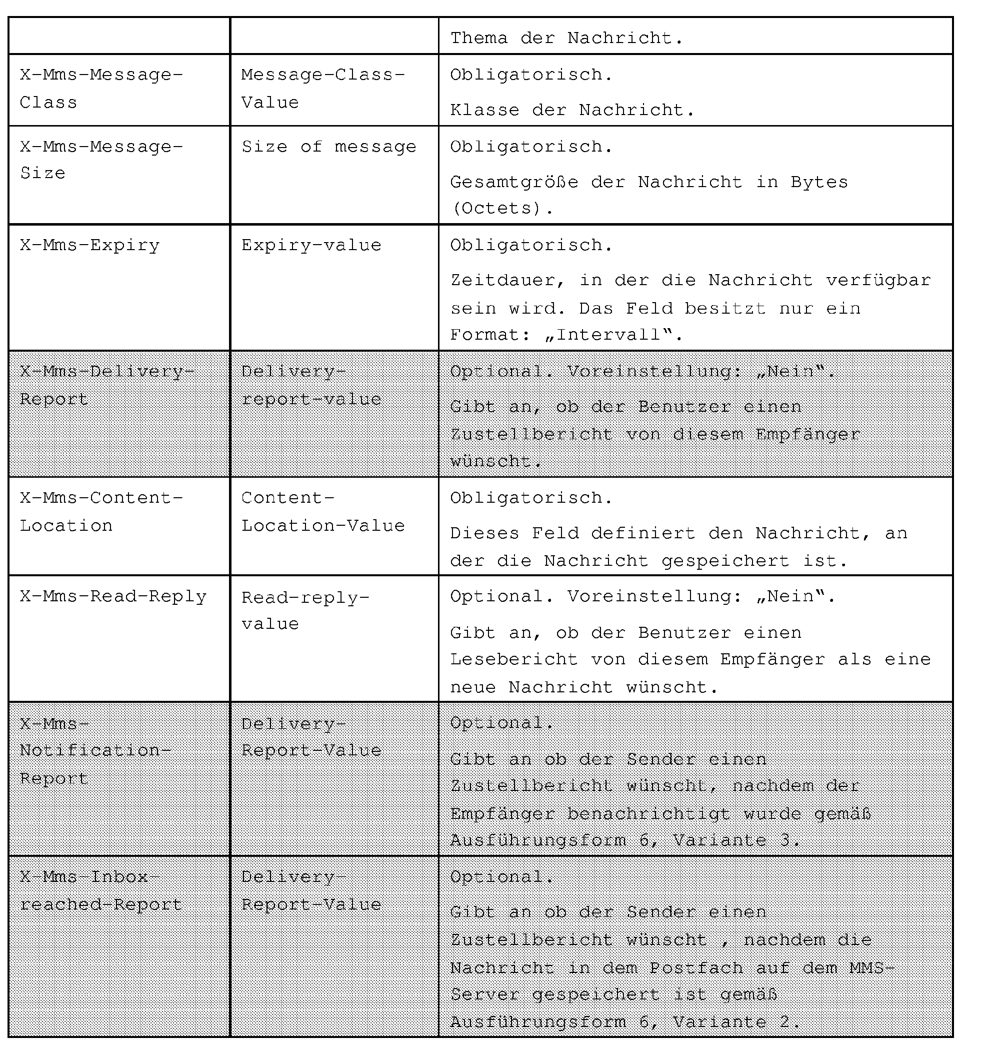

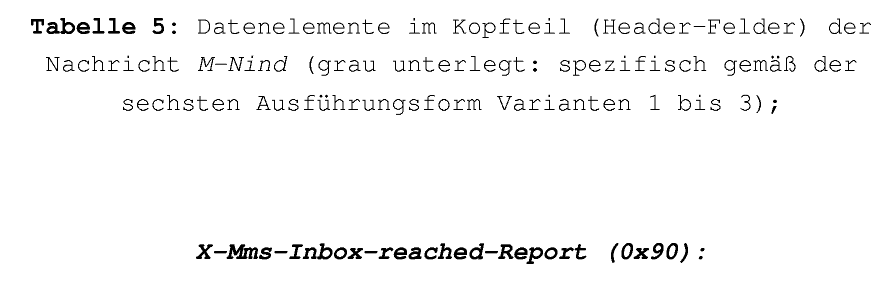

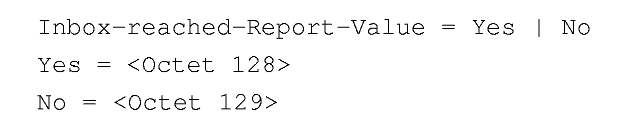

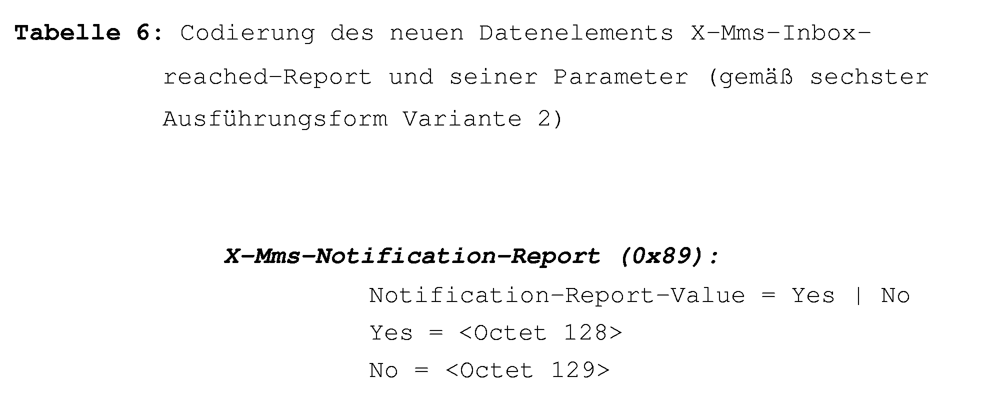

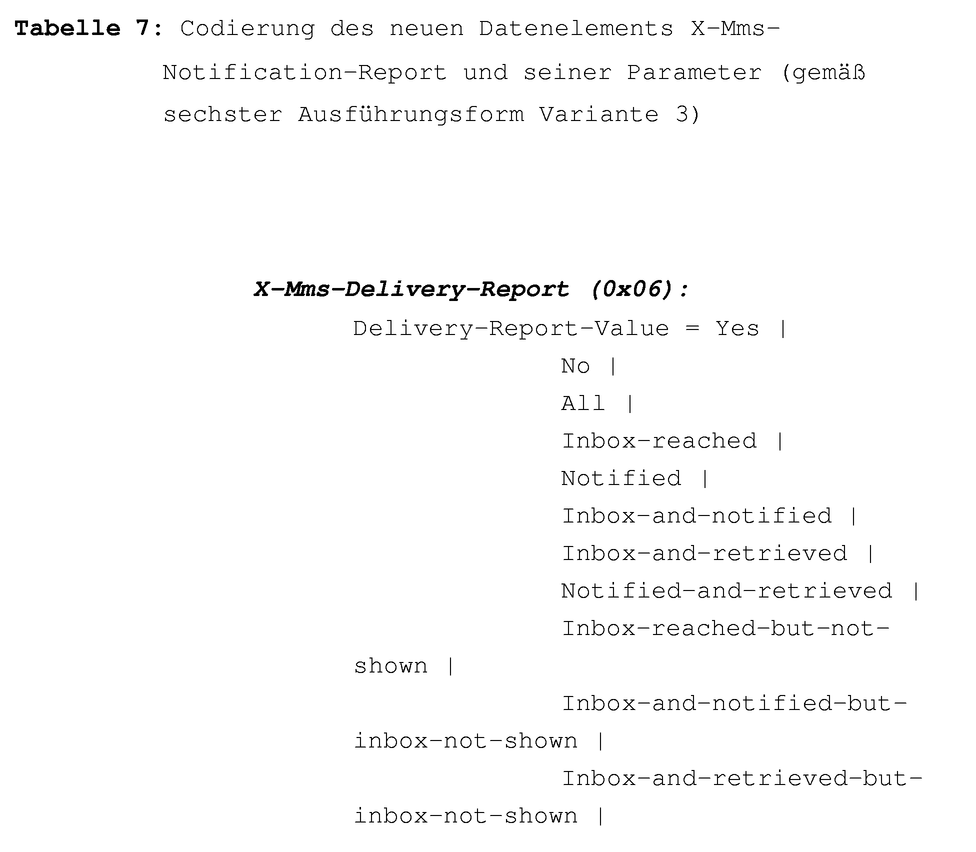

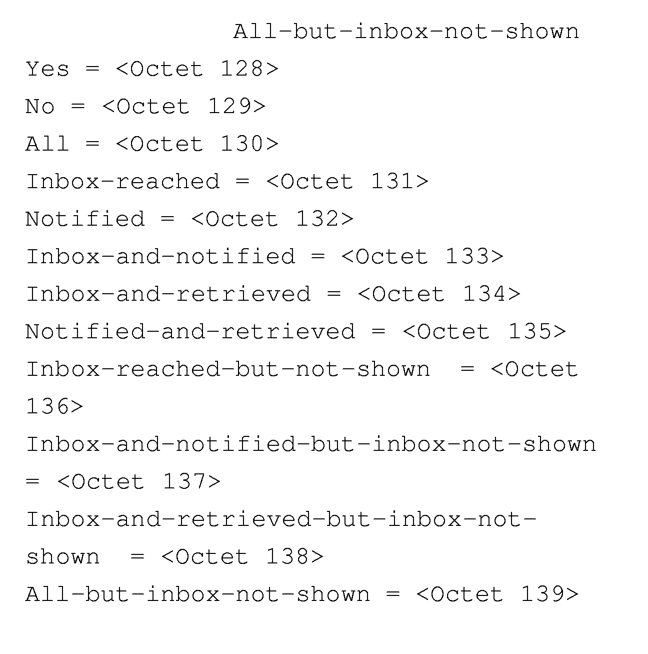

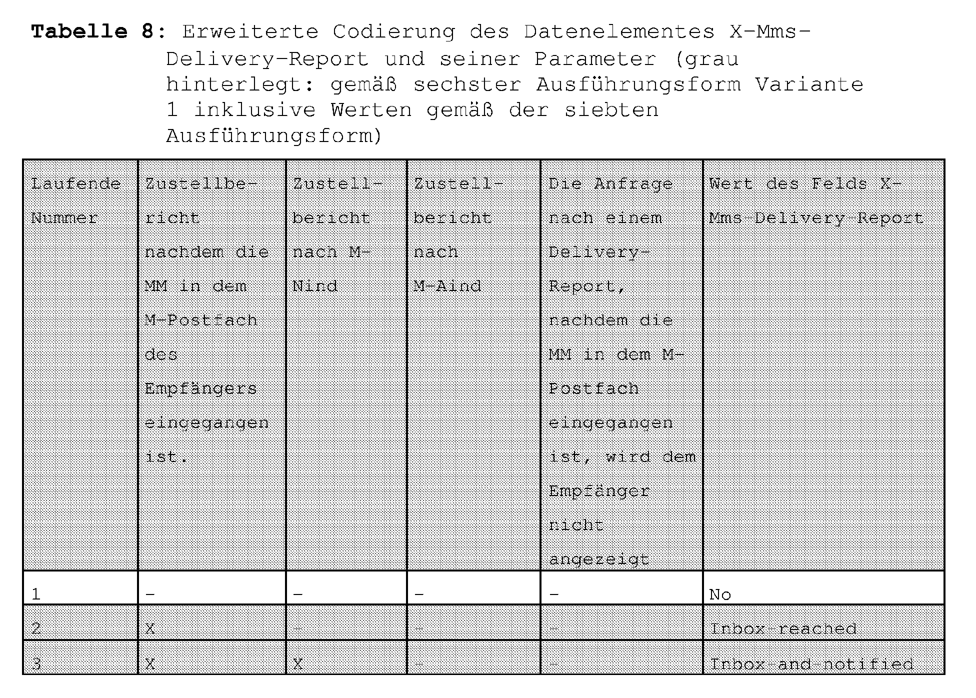

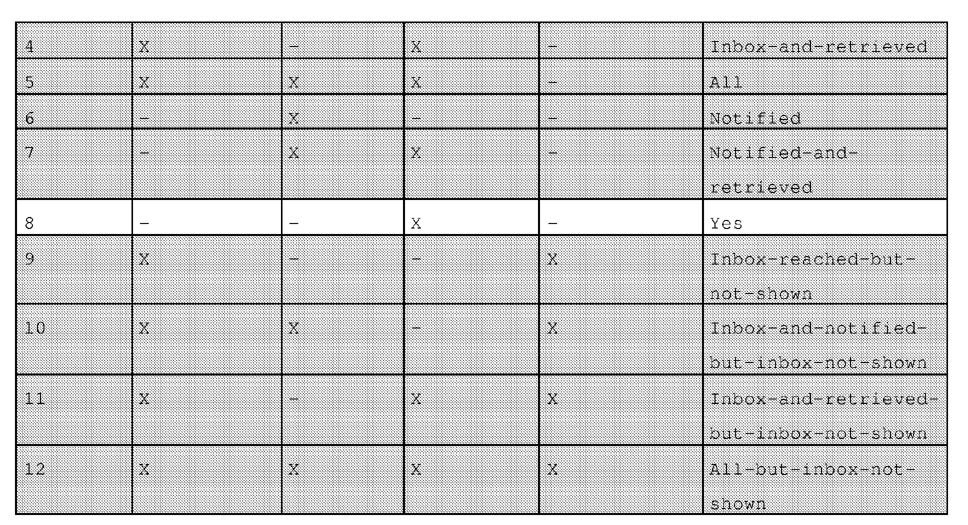

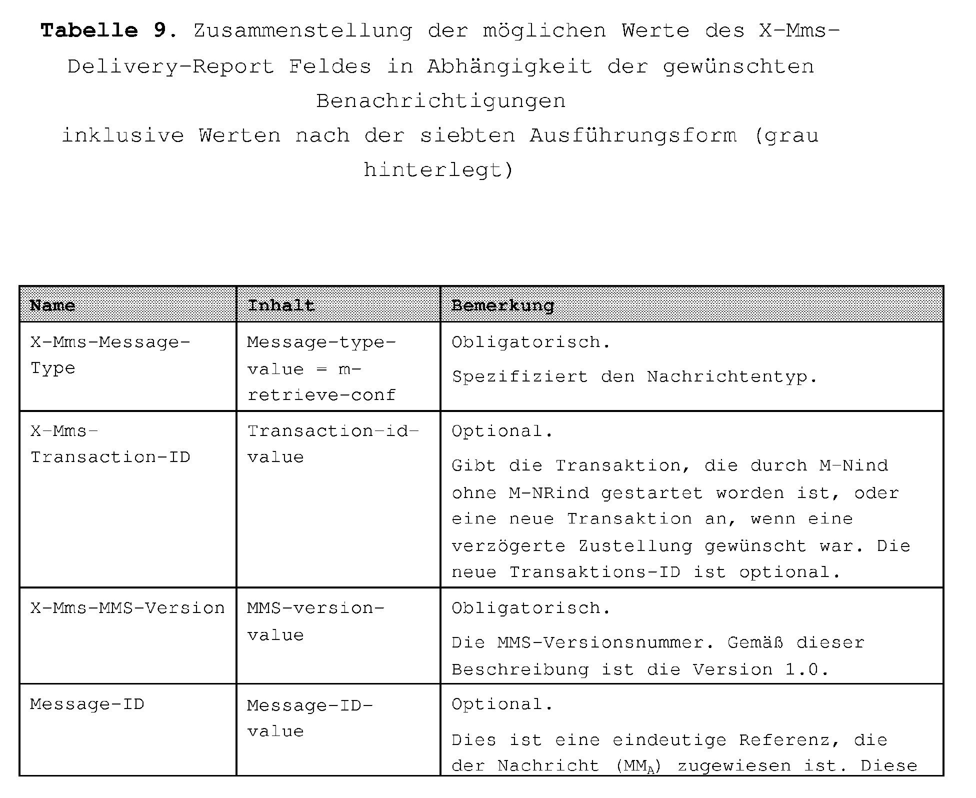

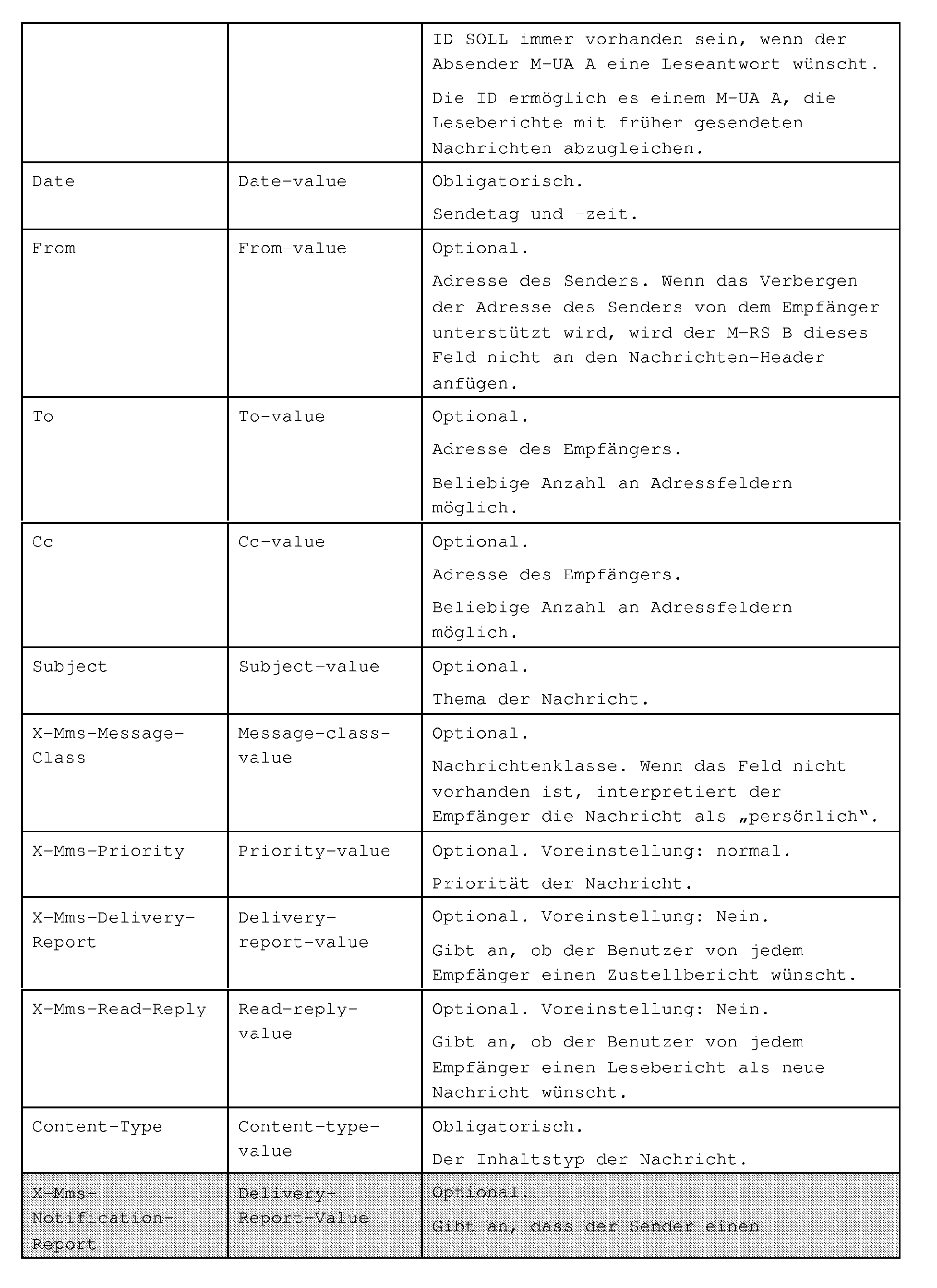

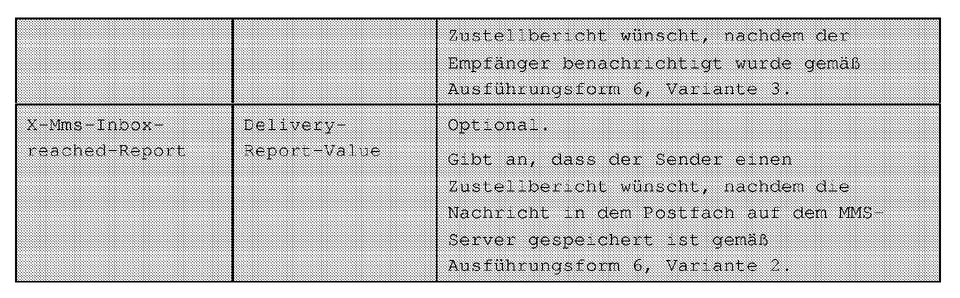

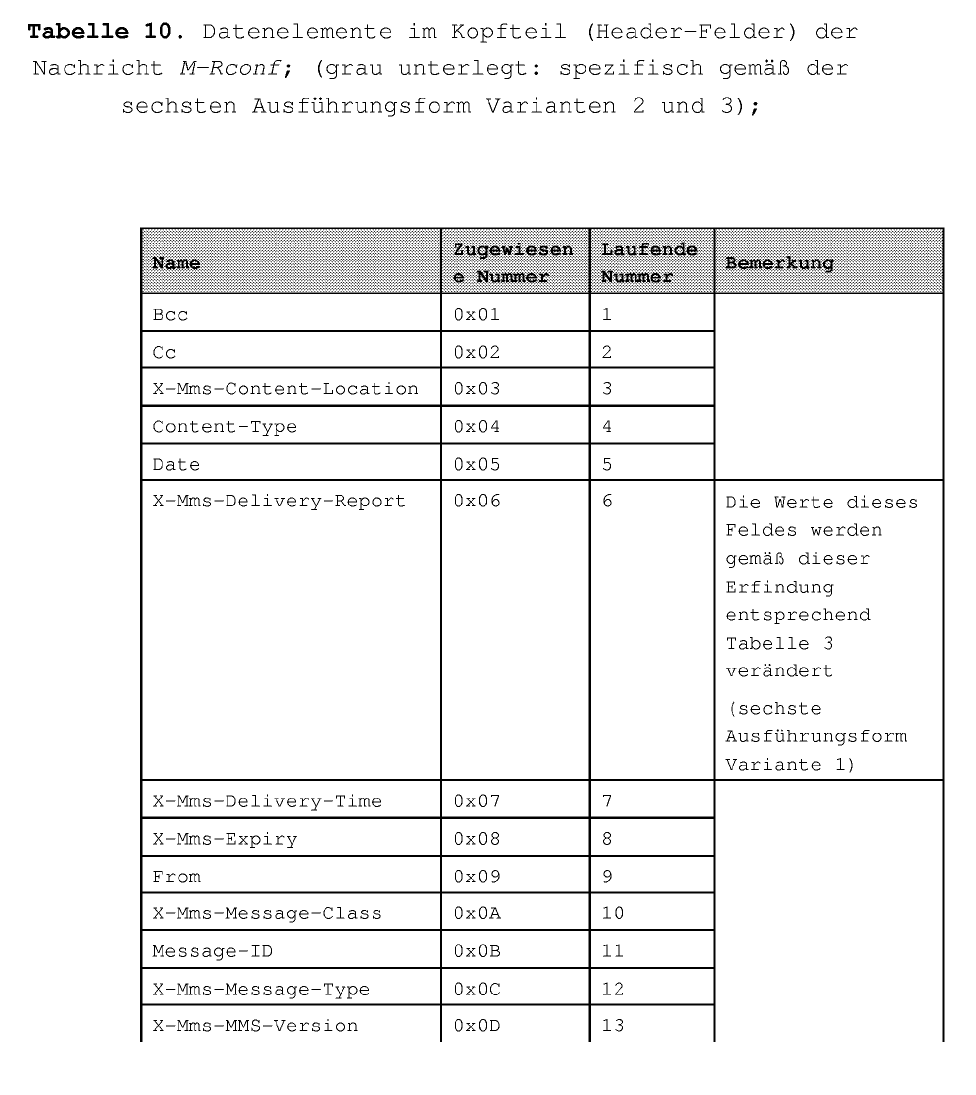

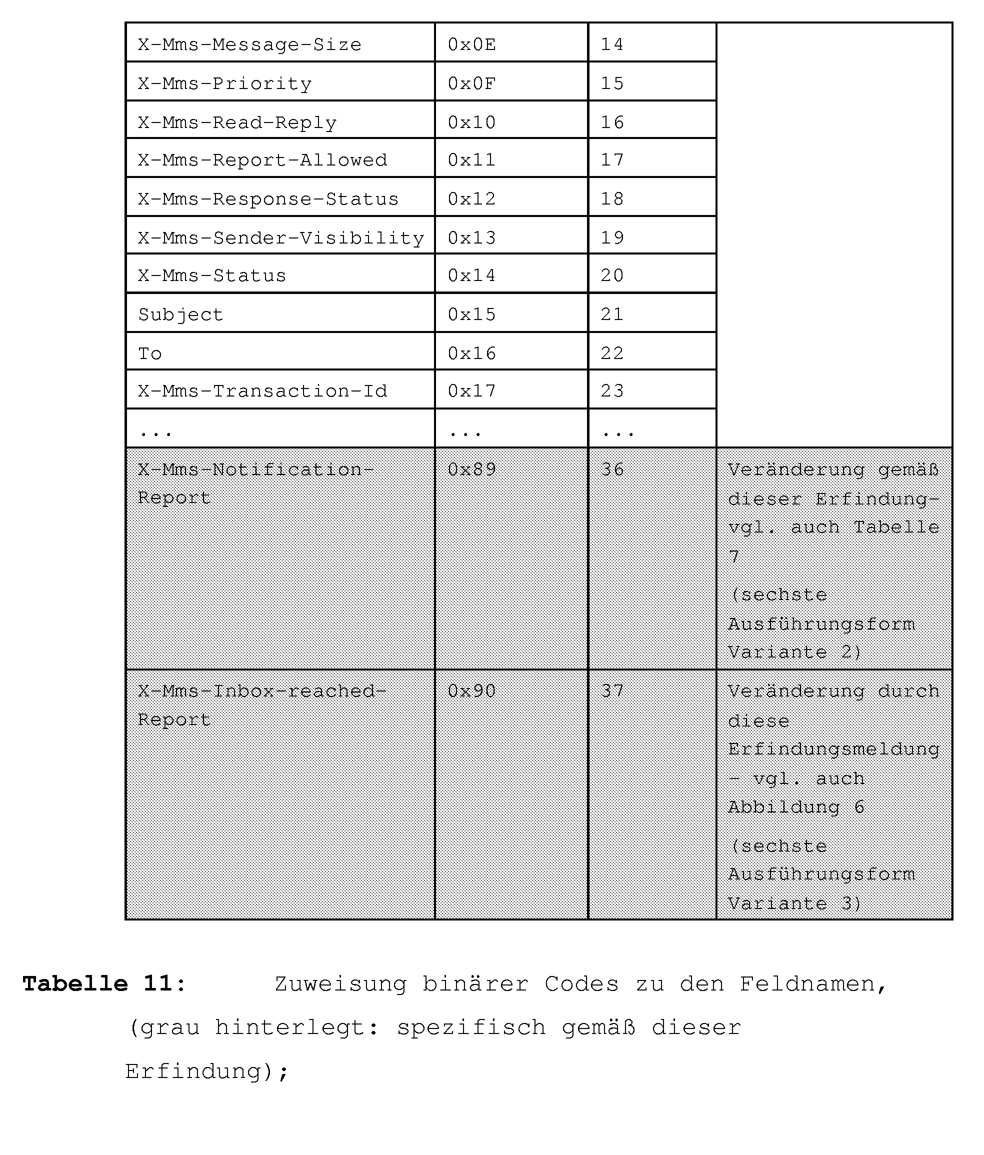

## Patentansprüche

1. Verfahr zum Senden einer Nachricht (MM) durch
Senden der Nachricht(MM) zu einer einem Empfänger (M-UA_B) zugeordneten Empfängerverbindungseinheit (M-SR B) durch eine Sendeanfrage (M-Sreq),
**gekennzeichnet durch**
optionales Benachrichtigen des Senders (M-UA_A) der Nachricht (MM) über den Status der gesendeten Nachricht gemäß einem Benachrichtigungsmodus, insbesondere **durch** eine erste Benachrichtigung (M-Dind1), nachdem die Sendeanfrage (M-Sreq) in der Empfängerverbindungseinheit (M-SR B) eingegangen ist.

2. Verfahren nach Anspruch 1, wobei die Nachricht in einem Postfach des Empfängers (M-UA_B) in der Verbindungseinheit (M-SR B) hinterlegt wird und für den Empfänger (M-UA_B) bereitsteht.

3. Verfahren nach Anspruch 1 oder 2, wobei die erste Benachrichtigung (M-Dind1) von der Empfängerverbindungseinheit (M-SR B) zu einer dem Sender (M-UA_A) zugeordneten Senderverbindungseinheit (M-SR A) geschickt wird, von der der Sender (M-UA_A) die erste Benachrichtigung (M-Dind1) zugestellt bekommt oder abholen kann.

4. Verfahren nach einem der vorhergehenden Ansprüche, wobei die Nachricht eine Multimedianachricht (MM) für den standardisierten Multimedia Messaging Service (MMS) ist.

5. Verfahren nach einem der vorhergehenden Ansprüche, wobei der Benachrichtigungsmodus das Senden der ersten Benachrichtigung (M-Dind1), einer zweiten Benachrichtigung (M-Dind2) von der Empfängerverbindungseinheit (M-SR B) zur Senderverbindungseinheit (M-SR A), falls das Eintreffen einer Empfängerbenachrichtigung (M-Nind) über das Bereitstehen einer Nachricht (MM) vom Empfänger (M-UA_B) bestätigt wird, und/oder einer dritten Benachrichtigung (M-Dind3) von der Empfängerverbindungseinheit (M-SR B) zur Senderverbindungseinheit (M-SR A), falls der Empfänger die Nachricht von der Empfängerverbindungseinheit (M-SR B) heruntergeladen hat, festlegt.

6. Verfahren nach einem der vorhergehenden Ansprüche, wobei der Benachrichtigungsmodus in einem Datenelement in einem Kopfteil der Sendeanfrage (M-Sreq) insbesondere durch den Sender (M-UA_A) codiert wird.

7. Verfahren nach einem der Ansprüche 2 bis 6, wobei die erste Benachrichtigung (M-Dind1) von der Empfängerverbindungseinheit (M-SR B) generiert wird, und die Information über den Eingang der Sendeanfrage (M-Sreq) im Postfach des Empfängers auf der Verbindungseinheit (M-SR B) in einem Datenelement im Kopfteil der ersten Benachrichtigung (M-Dind1) codiert wird.

8. Verfahren nach einem der vorhergehenden Ansprüche, wobei der Empfänger (M-UA_B) durch eine Benachrichtigungsinformation darüber informiert wird, dass der Sender (M-UA_A) die erste Benachrichtigung (M-Dind1) wünscht.

9. Verfahren nach Anspruch 8, wobei die Benachrichtigungsinformation in einem Datenelement im Kopfteil einer Empfängerbenachrichtung (M-Nind) codiert wird.

10. Verfahren nach Anspruch 8 oder 9, wobei die Benachrichtigungsinformation in einem Datenelement im Kopfteil einer Zustellungsnachricht (M-Rconf) codiert wird, die von der Verbindungseinheit (M-SR B) zum Empfänger (M-UA_B) beim Herunterladen der Nachricht (MM) gesendet wird .

11. Verfahren nach einem der Ansprüche 2 bis 10, wobei ein Status-Datenelement (X-Mms-Status) im Kopfteil der ersten Benachrichtigung (M-Dind1) einen Wert "Inbox-reached" zugewiesen bekommt, wenn die Nachricht das Postfach des Empfängers (M-UA_B) erreicht hat, welcher dem Sender M-UA A mitteilt, dass die Nachricht das Postfach des Empfängers erreicht hat.

12. Verfahren nach einem der Ansprüche 5 bis 11, wobei zur Steuerung der Empfängerverbindungseinheit und/oder zur Benachrichtigung des Empfängers über den für den Sender geltenden Benachrichtigungsmodus ein Delivery-Report-Datenelement (X-Mms-Delivery-Report) im Kopfteil der Sendeanfrage (M-Sreq), der Empfängerbenachrichtigung (M-Nind) und/oder der Zustellnachricht (M-Rconf) mit folgenden Werten codiert wird:
• "Inbox-reached", wenn der Sender (M-UA_A) die erste Benachrichtigung (M-Dind1),
• "Notified", wenn der Sender (M-UA_A) die zweite Benachrichtigung (M-Dind2) oder
• "Inbox-and-retrieved", wenn der Sender (M-UA_A) die dritte Benachrichtigung (M-Dind3) anfordert,
sowie Kombinationen hiervon.

13. Verfahren nach einem der Ansprüche 1 bis 10, wobei ein Notification-Report-Datenelement (X-Mms-Notification-Report) im Kopfteil der Sendeanfrage (M-Sreq) mit folgenden Werten codiert wird:
• Feld-Namen des Notification-Report-Datenelements als 0x89
• Feld-Wert des Notification-Report-Datenelements mit JA, wenn der Sender eine Benachrichtigung haben möchte, nachdem eine Empfängerbenachrichtigung (M-Nind) beim Empfänger eingegangen ist, andernfalls mit NEIN.

14. Verfahren nach einem der Ansprüche 2 bis 10, wobei ein Inbox-reached-Report-Datenelement (XMms-Inboxreached-Report) im Kopfteil der Sendeanfrage (M-Sreq) mit folgenden Werten codiert wird:
• Feld-Namen des Inbox-reached-Report-Datenelements als 0x90
• Feld-Werte des Inbox-reached-Report-Datenelements mit JA, wenn der Sender die erste Benachrichtigung (M-Dind1) über den Eingang der Nachricht in dem Postfach des Empfängers erhalten soll, andernfalls mit NEIN.

15. Verfahren nach den Ansprüchen 12, 13 und 14, wobei das Notification-Report-Datenelement und das Inbox-reached-Report-Datenelement zu einem Datenelement zusammengefasst sind, das gemäß Anspruch 12 codiert wird.

16. Verfahren nach einem der Ansprüche 8 bis 10, wobei die Erkennbarkeit des Benachrichtigungsmodus des Senders beim Empfänger eingeschränkt wird.

17. Verfahren nach einem der Ansprüche 2 bis 16, wobei ein Delivery-Report-Datenelement X-Mms-Delivery-Report im Kopfteil einer Empfängerbenachrichtigung (M-Nind), die den Empfänger (M-UA B) über das Bereitstehen einer Nachricht (MM) informiert, gemäß Anspruch 12 codiert wird.

18. Verfahren nach einem der vorhergehenden Ansprüche, wobei der Empfänger das Absenden der ersten Benachrichtigung (M-Dind1) untersagen kann.

19. Verfahren nach Anspruch 18, wobei die Untersagung als Option in einem MMS User Profil codiert wird.

20. Vorrichtung zum Senden einer Nachricht (MM) mit
einer Sendereinrichtung (M-UA_A) zum Senden der Nachricht(MM) zu einer Senderverbindungseinrichtung (M-SR A) oder zu einer einem Empfänger (M-UA_B) zugeordneten Empfängerverbindungseinheit (M-SR B) durch eine Sendeanfrage (M-Sreq) und
einer Empfängereinrichtung zum Empfangen einer ersten Benachrichtigung (M-Dind1) über den Status der gesendeten Nachricht (MM),
**dadurch gekennzeichnet, dass**
mit der Sendeeinrichtung (M-UA_A) ein Benachrichtigungsmodus an den Empfänger übertragbar ist, der die Art der Benachrichtigung des Senders über den Status einer gesendeten Nachricht festlegt.

21. Vorrichtung nach Anspruch 20, wobei die Nachricht eine Multimedianachricht (MM) für den standardisierten Multimedia Messaging Service (MMS) ist.

22. Vorrichtung nach Anspruch 20 oder 21, wobei durch die Empfängereinrichtung aus einer ersten Benachrichtigung (M-Dind1) Information über die Ankunft der Nachricht (MM) in einem Postfach des Empfängers, aus einer zweiten Benachrichtigung (M-Dind2) von der Empfängerverbindungseinheit (M-SR B) oder Senderverbindungseinheit (M-SR A) Information über das Eintreffen einer Empfängerbenachrichtigung (M-Nind) über das Bereitstehen einer Nachricht (MM) für den Empfänger (M-UA_B), und/oder aus einer dritten Benachrichtigung (M-Dind3) von der Empfängerverbindungseinheit (M-SR B) oder Senderverbindungseinheit (M-SR A) Information über ein Herunterladen der Nachricht von der Empfängerverbindungseinheit (M-SR B) durch den Empfänger exzerpierbar ist.

23. Vorrichtung nach einem der Ansprüche 20 bis 22, wobei ein Benachrichtigungsmodus in einem Datenelement in einem Kopfteil der Sendeanfrage (M-Sreq) codierbar ist, wonach der Sender die erste, zweite und/oder dritte Benachrichtigung erhält.

24. Vorrichtung nach einem der Ansprüche 20 bis 23, wobei die Information über den Eingang der Sendeanfrage (M-Sreq) im Postfach des Empfängers in einem Datenelement im Kopfteil der ersten Benachrichtigung (M-Dind1) codiert ist.

25. Vorrichtung nach einem der Ansprüche 20 bis 24, wobei ein Status-Datenelement (X-Mms-Status) im Kopfteil der ersten Benachrichtigung (M-Dind1) einen Wert "Inbox-reached" besitzt, wenn die Nachricht das Postfach des Empfängers (M-UA_B) erreicht hat.

26. Vorrichtung nach einem der Ansprüche 22 bis 25, wobei zur Steuerung der Empfängerverbindungseinheit und/oder zur Benachrichtigung des Empfängers über den für den Sender geltenden Benachrichtigungsmodus ein Delivery-Report-Datenelement (X-Mms-Delivery-Report) im Kopfteil der Sendeanfrage (M-Sreq) mit folgenden Werten codierbar ist:
"Inbox-reached", wenn der Sender (M-UA_A) die erste Benachrichtigung (M-Dind1),
"Notified", wenn der Sender (M-UA_A) die zweite Benachrichtigung (M-Dind2) oder
"Inbox-and-retrieved", wenn der Sender (M-UA_A) die dritte Benachrichtigung (M-Dind3) anfordert,
sowie Kombinationen hiervon.

27. Vorrichtung nach einem der Ansprüche 20 bis 25, wobei ein Notification-Report-Datenelement (X-Mms-Notification-Report) im Kopfteil der Sendeanfrage (M-Sreq) mit folgenden Werten codierbar ist:
Feld-Namen des Notification-Report-Datenelements als 0x89 und
Feld-Wert des Notification-Report-Datenelements mit JA, wenn der Sender eine Benachrichtigung gemäß der Sendeanfrage anfordert, nachdem eine Empfängerbenachrichtigung (M-Nind) beim Empfänger eingegangen ist, andernfalls mit NEIN.

28. Vorrichtung nach einem der Ansprüche 20 bis 25, wobei ein Inbox-reached-Report-Datenelement (XMms-Inboxreached-Report) im Kopfteil der Sendeanfrage (M-Sreq) mit folgenden Worten codierbar ist:
Feld-Namen des Inbox-reached-Report-Datenelements als 0x90 und
Feld-Wert des Inbox-reached-Report-Datenelements mit JA, wenn der Sender die erste Benachrichtigung (M-Dind1) über den Eingang der Nachricht in dem Postfach des Empfängers erhalten soll, andernfalls mit NEIN.

29. Vorrichtung nach den Ansprüchen 26, 27 und 28, wobei das Notification-Report-Datenelement und das Inbox-reached-Report-Datenelement zu einem Datenelement zusammengefasst sind, das gemäß Anspruch 26 codierbar ist.

30. Vorrichtung nach einem der Ansprüche 20 bis 29, wobei die Erkennbarkeit des Benachrichtigungsmodus des Senders beim Empfänger einschränkbar ist.

31. Vorrichtung zum Empfangen einer Nachricht (MM) mit
einer Empfängerverbindungseinheit (M-UA_B) zum Empfangen der Nachricht(MM) in einer Sendeanfrage (M-Sreq) von einer einem Sender (M-UA_A) zugeordneten Senderverbindungseinheit (M-SR A),
**dadurch gekennzeichnet, dass**
die Empfängerverbindungseinheit (M-SR B) einen Benachrichtigungsgenerator zum Erzeugen einer ersten Benachrichtigung (M-Dind1) umfasst, mit der der Sender (M-UA_A) der Nachricht (MM) gemäß einem vorgegebenen Benachrichtigungsmodus in Abhängigkeit des Vorliegens der Sendeanfrage (M-Sreq) in der Empfängerverbindungseinheit (M-SR B) benachrichtigbar ist.

32. Vorrichtung nach Anspruch 31, wobei die Nachricht in einem Postfach des Empfängers (M-UA_B) in der Empfängerverbindungseinheit (M-SR B) hinterlegbar und für den Empfänger (M-UA_B) bereitstellbar ist.

33. Vorrichtung nach Anspruch 31 oder 32, wobei die erste Benachrichtigung (M-Dind1) von der Empfängerverbindungseinheit (M-SR B) zu einer dem Sender (M-UA_A) zugeordneten Senderverbindungseinheit (M-SR A) und weiter zu dem Sender (M-UA_A) übertragbar ist.

34. Vorrichtung nach einem der Ansprüche 31 bis 33, wobei die Nachricht eine Multimedianachricht (MM) für den standardisierten Multimedia Messaging Service (MMS) ist.

35. Vorrichtung nach einem der Ansprüche 31 bis 34, wobei der Benachrichtigungsmodus das Senden
der ersten Benachrichtigung (M-Dind1),
einer zweiten Benachrichtigung (M-Dind2) von der Empfängerverbindungseinheit (M-SR B) zur Senderverbindungseinheit (M-SR A), falls das Eintreffen einer Empfängerbenachrichtigung (M-Nind) über das Bereitstehen einer Nachricht (MM) vom Empfänger (M-UA_B) bestätigt wird, und/oder
einer dritten Benachrichtigung (M-Dind3) von der Empfängerverbindungseinheit (M-SR B) zur Senderverbindungseinheit (M-SR A), falls der Empfänger die Nachricht von der Empfängerverbindungseinheit (M-SR B) heruntergeladen hat, umfasst.

36. Vorrichtung nach einem der Ansprüche 31 bis 35, wobei der Benachrichtigungsmodus in einem Datenelement in einem Kopfteil der Sendeanfrage (M-Sreq) codierbar ist.

37. Vorrichtung nach einem der Ansprüche 32 bis 36, wobei die Information über den Eingang der Sendeanfrage (M-Sreq) im Postfach des Empfängers auf der Empfängerverbindungseinheit (M-SR B) in einem Datenelement im Kopfteil der ersten Benachrichtigung (M-Dind1) codierbar ist.

38. Vorrichtung nach einem der Ansprüche 31 bis 37, wobei durch den Benachrichtigungsgenerator eine Empfängerbenachrichtigung (M-Nind) erzeugbar ist, die den Empfänger (M-UA_B) über den Benachrichtigungsmodus gemäß der Sendeanfrage (M-Sreq) informiert.

39. Vorrichtung nach einem der Ansprüche 31 bis 38, wobei der Benachrichtigungsmodus in einem Datenelement im Kopfteil der Empfängerbenachrichtigung (M-Nind) codierbar ist.

40. Vorrichtung nach einem der Ansprüche 31 oder 39, wobei der Benachrichtigungsmodus in einem Datenelement im Kopfteil einer Zustellungsnachricht (M-Rconf) codierbar ist, die von der Empfängerverbindungseinheit (M-SR B) zum Empfänger (M-UA_B) beim Herunterladen der Nachricht (MM) gesendet wird.

41. Vorrichtung nach einem der Ansprüche 35 bis 40, wobei ein Status-Datenelement (X-Mms-Status) im Kopfteil der ersten, zweiten und/oder dritten Benachrichtigung (M-Dind1, M-Dind2, M-Dind3) einen Wert "Inbox-reached" zugewiesen bekommt, wenn die Nachricht das Postfach des Empfängers (M-UA_B) erreicht hat.

42. Vorrichtung nach einem der Ansprüche 32 bis 41, wobei zur Benachrichtigung des Empfängers über den für den Sender geltenden Benachrichtigungsmodus ein Delivery-Report-Datenelement (X-Mms-Delivery-Report) im Kopfteil der Empfängerbenachrichtigung (M-Nind) und/ oder der Zustellnachricht (M-Rconf) mit folgenden Werten codierbar ist:
"Inbox-reached", wenn der Sender (M-UA_A) die erste Benachrichtigung (M-Dind1),
"Notified", wenn der Sender (M-UA_A) die zweite Benachrichtigung (M-Dind2) oder
"Inbox-and-retrieved", wenn der Sender (M-UA_A) die dritte Benachrichtigung (M-Dind3) anfordert,
sowie Kombinationen hiervon.

43. Vorrichtung nach einem der Ansprüche 31 bis 42, wobei ein Notification-Report-Datenelement (X-Mms-Notification-Report) im Kopfteil der Sendeanfrage (M-Sreq) mit folgenden Werten codierbar ist:
Feld-Namen des Notification-Report-Datenelements als 0x89
Feld-Wert des Notification-Report-Datenelements mit JA, wenn der Sender gemäß der Sendeanfrage (M-Sreq) eine Benachrichtigung haben möchte, nachdem eine Empfängerbenachrichtigung (M-Nind) beim Empfänger eingegangen ist, andernfalls mit NEIN.

44. Vorrichtung nach einem der Ansprüche 32 bis 43, wobei ein Inbox-reached-Report-Datenelement (XMms-Inboxreached-Report) im Kopfteil der Sendeanfrage (M-Sreq) mit folgenden Worten codiert ist:
Feld-Namen des Inbox-reached-Report-Datenelements als 0x90
Feld-Werte des Inbox-reached-Report-Datenelements mit JA, wenn der Sender gemäß der Sendeanfrage (M-Sreq) die erste Benachrichtigung (M-Dind1) über den Eingang der Nachricht in dem Postfach des Empfängers erhalten soll, andernfalls mit NEIN.

45. Vorrichtung nach den Ansprüchen 42, 43 und 44, wobei das Notification-Report-Datenelement und das Inbox-reached-Report-Datenelement zu einem Datenelement zusammengefasst sind, das gemäß Anspruch 42 codiert ist.

46. Vorrichtung nach einem der Ansprüche 31 bis 45, wobei die Erkennbarkeit des Benachrichtigungsmodus des Senders beim Empfänger einschränkbar ist.

47. Vorrichtung nach einem der Ansprüche 31 bis 46, wobei ein Delivery-Report-Datenelement (X-Mms-Delivery-Report) im Kopfteil einer Empfängerbenachrichtigung (M-Nind), die den Empfänger (M-UA B) über das Bereitstehen einer Nachricht (MM) informiert, gemäß Anspruch 42 codierbar ist.

48. Vorrichtung nach einem der Ansprüche 31 bis 47, wobei der Empfänger das Absenden der ersten Benachrichtigung (M-Dind1) untersagen kann.

49. Vorrichtung nach Anspruch 48, wobei die Untersagung als Option in einem MMS User Profil codierbar ist.
